(19) Europäisches Patentamt
European Patent Office
Office européen des brevets

(11) **EP 3 691 953 B1**

(12) **EUROPÄISCHE PATENTSCHRIFT**

(45) Veröffentlichungstag und Bekanntmachung des Hinweises auf die Patenterteilung:
**09.08.2023   Patentblatt 2023/32**

(21) Anmeldenummer: **18762843.3**

(22) Anmeldetag: **04.09.2018**

(51) Internationale Patentklassifikation (IPC):
*B60M 1/28* (2006.01)      *B66F 7/06* (2006.01)
*B66F 11/04* (2006.01)     *E01B 37/00* (2006.01)
*B61L 15/00* (2006.01)     *B61F 9/00* (2006.01)
*B66C 23/50* (2006.01)     *B61L 23/00* (2006.01)
*B61D 15/02* (2006.01)

(52) Gemeinsame Patentklassifikation (CPC):
**B61L 23/00; B60M 1/28; B61D 15/02; B61F 9/005; B61L 15/0018; B66C 23/50; B66F 7/0666; B66F 11/046;** E01B 37/00

(86) Internationale Anmeldenummer:
**PCT/EP2018/073649**

(87) Internationale Veröffentlichungsnummer:
**WO 2019/068404 (11.04.2019 Gazette 2019/15)**

(54) **VERFAHREN ZUM BETREIBEN EINER SCHIENENGEFÜHRTEN OBERBAUMASCHINE SOWIE OBERBAUMASCHINE**

METHOD FOR OPERATING A RAIL-GUIDED SUPERSTRUCTURE MACHINE, AND SUPERSTRUCTURE MACHINE

PROCÉDÉ POUR FAIRE FONCTIONNER UNE MACHINE DE VOIE FERROVIAIRE ET MACHINE DE VOIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.10.2017   AT 3932017**

(43) Veröffentlichungstag der Anmeldung:
**12.08.2020   Patentblatt 2020/33**

(73) Patentinhaber: **Plasser & Theurer Export von Bahnbaumaschinen GmbH
1010 Wien (AT)**

(72) Erfinder: **PHILIPP, Thomas
4060 Leonding (AT)**

(56) Entgegenhaltungen:
**WO-A2-2017/144153      DE-A1- 3 015 227
DE-U1-202006 019 036**

EP 3 691 953 B1

**Beschreibung**

Die Erfindung betrifft ein Verfahren zum Betreiben einer schienengeführten Oberbaumaschine. Ferner betrifft die Erfindung eine schienengeführte Oberbaumaschine.

Stand der Technik

Schienengeführte Oberbaumaschinen werden zur Herstellung, Erneuerung und Instandhaltung von Oberleitungsanlagen eingesetzt. Hierzu weisen die Oberbaumaschinen Arbeitsgeräte auf, wie beispielsweise Hebearbeitsbühnen, frei verschwenkbare Arbeitsbühnen, Kräne und Manipulatoren, die in Abhängigkeit einer Last und einer Stellung ein variables Kippmoment auf die jeweilige Oberbaumaschine erzeugen. Zur Gewährleistung der Entgleisungssicherheit wird unter der Annahme von Extrembedingungen, wie beispielsweise einer maximalen Belastung der Arbeitsgeräte und einer maximalen Gleisüberhöhung, die Bewegungsfreiheit der Arbeitsgeräte sowie die Arbeitsfahrgeschwindigkeit der Oberbaumaschine beschränkt.

Die Offenlegungsschrift DE 30 15 227 A1 offenbart ein Verfahren zum Betreiben einer schienengeführten Oberbaumaschine.

Die Offenlegungsschrift WO 2017 144 153 A2 offenbart ein Verfahren zum Betreiben eines Schienenfahrzeugs, wobei eine Zustandsgröße des Schienenfahrzeugs mittels eines Radentlastungssensors bestimmt wird.

Die Gebrauchsmusterschrift DE 20 2006 019 036 U1 offenbart ein Verfahren zum Betreiben eines Schienenfahrzeugs, wobei eine Zustandsgröße des Schienenfahrzeugs mittels eines Neigungsgebers bestimmt wird.

Zusammenfassung der Erfindung

Der Erfindung liegt die Aufgabe zugrunde, ein Verfahren zum Betreiben einer schienengeführten Oberbaumaschine zu schaffen, das die Leistungsfähigkeit und die Wirtschaftlichkeit der Oberbaumaschine erhöht und deren Einsatzbereich erweitert.

Diese Aufgabe wird durch ein Verfahren mit den Merkmalen des Anspruches 1 gelöst. Erfindungsgemäß wurde erkannt, dass durch die Annahme von Extrembedingungen die Leistungsfähigkeit der Oberbaumaschine in einer Vielzahl von in der Praxis auftretenden Arbeitssituationen unverhältnismäßig eingeschränkt wird. Deshalb wird in Abhängigkeit eines momentanen Betriebszustands mindestens eine Zustandsgröße der Oberbaumaschine ermittelt und die mindestens eine Zustandsgröße mit mindestens einem vordefinierten Grenzwert verglichen. Der mindestens eine vordefinierte Grenzwert dient zur Überwachung der Entgleisungssicherheit der Oberbaumaschine, so dass durch den Vergleich der mindestens einen Zustandsgröße mit dem mindestens einen vordefinierten Grenzwert für den momentanen Betriebszustand überprüft wird, ob die Entgleisungssicherheit noch zuverlässig gewährleistet oder gefährdet ist. Hierdurch ist es möglich, die Leistungsfähigkeit und den potentiellen Einsatzbereich der Oberbaumaschine in Abhängigkeit des momentanen Betriebszustands besser auszuschöpfen, so dass die Wirtschaftlichkeit der Oberbaumaschine verbessert wird. Trotz des erweiterten Einsatzbereichs und der erhöhten Leistungsfähigkeit der Oberbaumaschine ist zu jeder Zeit die Entgleisungssicherheit aufgrund der Überwachung zuverlässig gewährleistet.

Die mindestens eine Zustandsgröße charakterisiert somit die Entgleisungssicherheit der Oberbaumaschine. Die mindestens eine Zustandsgröße wird erfindungsgemäß in Abhängigkeit einer Radführungskraft und einer Radaufstandskraft der Oberbaumaschine ermittelt. Die mindestens eine Zustandsgröße ist vorzugsweise ein Verhältnis bzw. ein Quotient aus einer Radführungskraft und einer Radaufstandskraft. Das Ermitteln der mindestens einen Zustandsgröße und/oder das Vergleichen der mindestens einen Zustandsgröße mit dem mindestens einen Grenzwert erfolgt vorzugsweise mittels einer Steuereinrichtung der Oberbaumaschine. Das Ermitteln der mindestens einen Zustandsgröße und das Vergleichen mit dem mindestens einen Grenzwert erfolgt insbesondere in Echtzeit, so dass die Überwachung der Entgleisungssicherheit während des Betriebs schnell und zuverlässig erfolgt.

Ein Verfahren nach Anspruch 2 gewährleistet einen erweiterten Einsatzbereich und eine erhöhte Leistungsfähigkeit und somit eine erhöhte Wirtschaftlichkeit. Dadurch, dass wiederholt insbesondere in gleichen Zeitabständen, während der Arbeitsfahrt die mindestens eine Zustandsgröße ermittelt und mit dem mindestens einen Grenzwert verglichen wird, wird in zuverlässiger Weise ständig die Entgleisungssicherheit während der Arbeitsfahrt und während der Betätigung des Arbeitsgeräts überwacht. Das Ermitteln der mindestens einen Zustandsgröße und das Vergleichen mit dem mindestens einen Grenzwert erfolgt vorzugsweise online und/oder in Echtzeit. Durch das wiederholte Ermitteln und Vergleichen ist ein uneingeschränkter Betrieb des Arbeitsgeräts während der Arbeitsfahrt möglich, solange die mindestens eine Zustandsgröße innerhalb eines vordefinierten Toleranzbereichs für die Entgleisungsstabilität liegt.

Ein Verfahren nach Anspruch 3 gewährleistet einen erweiterten Einsatzbereich und eine erhöhte Leistungsfähigkeit. Wenn die mindestens eine Zustandsgröße außerhalb des durch den Grenzwert Gw definierten Toleranzbereichs liegt, erzeugt die Oberbaumaschine ein Warnsignal, so dass ein Operator der Oberbaumaschine einen Warnhinweis erhält, dass sich die Oberbaumaschine in einem Grenzbereich der Entgleisungssicherheit befindet. Das Warnsignal ist optisch und/oder akustisch. Der Operator hat hierdurch die Möglichkeit, den momentanen Betriebszustand der Oberbaumaschine derart zu ändern, dass ein zu hohes Kippmoment, das die Gefährdung der Entgleisungssicherheit verursacht, reduziert wird. Der Operator bringt hierzu beispielsweise das Arbeitsgerät in einen sicheren Zustand. Die Vorschubbewegung der Oberbaumaschine während einer Arbeitsfahrt muss hierzu nicht unterbrochen werden.

Ein Verfahren nach Anspruch 4 gewährleistet einen erweiterten Einsatzbereich und eine erhöhte Leistungsfähigkeit. Der Betriebszustand der Oberbaumaschine wird automatisch verändert, wenn die mindestens eine Zustandsgröße außerhalb des durch den Grenzwert Gs definierten Toleranzbereichs liegt. Der Betriebszustand der Oberbaumaschine wird aufgrund einer akuten Gefährdung der Entgleisungssicherheit automatisch derart verändert, dass die Oberbaumaschine wieder in einen sicheren Betriebszustand ohne eine Gefährdung der Entgleisungssicherheit überführt wird. Der Betriebszustand wird beispielsweise derart automatisch geändert, dass ein Antrieb der Oberbaumaschine abgeschaltet und die Oberbaumaschine gestoppt wird und/oder das von dem Arbeitsgerät verursachte Kippmoment durch eine Bewegung des Arbeitsgeräts reduziert wird. Vorzugsweise erzeugt die Oberbaumaschine vor einer automatischen Veränderung des Betriebszustands ein Warnsignal, so dass ein Operator die Möglichkeit hat, die Oberbaumaschine selbst wieder in einen sicheren Betriebszustand zu überführen.

Ein Verfahren nach Anspruch 5 gewährleistet einen erweiterten Einsatzbereich und eine erhöhte Leistungsfähigkeit. Die mindestens eine Zustandsgröße, die die Entgleisungssicherheit der Oberbaumaschine charakterisiert, ist abhängig von einer im momentanen Betriebszustand der Oberbaumaschine erforderlichen Radführungskraft. Die Radführungskraft ist wiederum abhängig von einem Krümmungsparameter des Gleises bzw. des Gleisabschnitts, auf dem sich die Oberbaumaschine aktuell befindet. Der Krümmungsparameter ist insbesondere ein Bogenradius des Gleisabschnitts, auf dem sich die Oberbaumaschine aktuell befindet. Der Krümmungsparameter ist insbesondere ausgewählt aus der Gruppe Bogenradius der kurveninneren Schiene, Bogenradius der kurvenäußeren Schiene oder mittlerer Bogenradius des Gleises. Der mittlere Bogenradius des Gleises liegt zwischen dem Bogenradius der kurveninneren Schiene und dem Bogenradius der kurvenäußeren Schiene. Dadurch, dass die mindestens eine Zustandsgröße in Abhängigkeit des Krümmungsparameters des Gleises ermittelt wird, charakterisiert die mindestens eine Zustandsgröße die Entgleisungssicherheit genau und zuverlässig, so dass die Überwachung der Entgleisungssicherheit zuverlässig gewährleitstet ist.

Ein Verfahren nach Anspruch 6 gewährleistet einen erweiterten Einsatzbereich und eine erhöhte Leistungsfähigkeit. Dadurch, dass die mindestens eine Zustandsgröße in Abhängigkeit einer zu der Entgleisungssicherheit erforderlichen Radführungskraft der Oberbaumaschine ermittelt wird, ist eine genaue und zuverlässige Überwachung der Entgleisungssicherheit möglich. Die Radführungskraft wird in Abhängigkeit des Krümmungsparameters des Gleises bzw. des Gleisabschnitts, auf dem sich die Oberbaumaschine aktuell befindet, ermittelt. Die Radführungskraft wird vorzugsweise anhand einer in einer Steuereinrichtung der Oberbaumaschine hinterlegten Tabelle und/oder Berechnungsvorschrift ermittelt. Die mindestens eine Zustandsgröße, die die Entgleisungssicherheit der Oberbaumaschine charakterisiert wird somit genau und zuverlässig ermittelt.

Ein Verfahren nach Anspruch 7 gewährleistet einen erweiterten Einsatzbereich und eine erhöhte Leistungsfähigkeit. Mittels des mindestens einen ersten Messsensors wird die mindestens eine erste Messgröße messtechnisch bestimmt, aus der wiederum der Krümmungsparameter des Gleises bzw. des Gleisabschnitts, auf dem sich die Oberbaumaschine aktuell befindet, ermittelt wird. Die mindestens eine Zustandsgröße wird in Abhängigkeit des Krümmungsparameters ermittelt. Da die Entgleisungssicherheit abhängig von einer Radführungskraft der Oberbaumaschine ist und die Radführungskraft wiederum abhängig von dem Krümmungsparameter des Gleises ist, charakterisiert die mindestens eine Zustandsgröße die Entgleisungssicherheit genau und zuverlässig. Vorzugsweise werden mittels des mindestens einen ersten Messsensors wiederholt Messwerte zu der mindestens einen ersten Messgröße messtechnisch ermittelt, so dass aus den Messwerten wiederholt der Krümmungsparameter ermittelt wird. Dies erfolgt vorzugsweise online und/oder in Echtzeit.

Ein Verfahren nach Anspruch 8 gewährleistet einen erweiterten Einsatzbereich und eine erhöhte Leistungsfähigkeit. Weist die Oberbaumaschine Drehgestelle auf, so ist durch eine Messung des Ausschwenkwegs eines der Drehgestelle in einfacher und zuverlässiger Weise der Krümmungsparameter, insbesondere der Bogenradius, des Gleisabschnitts ermittelbar, auf dem sich die Oberbaumaschine aktuell befindet. Der Ausschwenkweg kann in einfacher Weise mittels des mindestens einen ersten Messsensors gemessen werden. Der Messsensor ist insbesondere ein kontinuierlich oder diskret ausgebildeter Weg-Messsensor. Der Messsensor ist beispielsweise ein kontinuierlicher Linearaufnehmer oder eine diskrete mechanische Schaltkulisse.

Ein Verfahren nach Anspruch 9 gewährleistet einen erweiterten Einsatzbereich und eine erhöhte Leistungsfähigkeit. Durch die Messung des horizontalen Abstands zwischen der Oberbaumaschine und dem Gleis ist der Krümmungsparameter des Gleises bzw. des Gleisabschnitts, auf dem sich die Oberbaumaschine aktuell befindet, genau und zuverlässig ermittelbar. Der horizontale Abstand wird auch als Pfeilhöhe bezeichnet. Die Messung des horizontalen Abstands ist sowohl bei Oberbaumaschinen mit Drehgestellen als auch bei Oberbaumaschinen ohne Drehgestelle, also mit nicht verschwenkbaren Achsen, möglich. Der horizontale Abstand wird in einem Mittenbereich der Oberbaumaschine, also zwischen den Achsen der Oberbaumaschine, und/oder im Überhang der Oberbaumaschine gemessen. Der mindestens eine Messsensor ist insbesondere optisch ausgebildet.

Ein Verfahren nach Anspruch 10 gewährleistet einen erweiterten Einsatzbereich und eine erhöhte Leistungsfähigkeit. Der gespeicherte Wert für die mindestens eine Radaufstandskraft charakterisiert eine angenommene minimal auftretende Radaufstandskraft. Hierdurch fließt in die Ermittlung der mindestens einen Zustandsgröße der für die Entgleisungssicherheit ungünstigste Wert der mindestens einen Radaufstandskraft ein. Die Berechnung der mindestens einen Zustandsgröße wird hierdurch vereinfacht. Zudem ist vorzugsweise ein gespeicherter Wert für die mindestens eine Radaufstandskraft für den Fall vorhanden, dass eine für die Ermittlung der mindestens einen Radaufstandskraft durchzuführende Messung, beispielsweise aufgrund eines technischen Defekts, nicht durchführbar ist.

Ein Verfahren nach Anspruch 11 gewährleistet einen erweiterten Einsatzbereich und eine erhöhte Leistungsfähigkeit. Durch die Messung der mindestens einen zweiten Messgröße ist eine genaue und zuverlässige Ermittlung der mindestens einen Radaufstandskraft möglich. Da die mindestens einen Zustandsgröße von der mindestens einen Radaufstandskraft abhängig ist, ist hierdurch eine genaue und zuverlässige Überwachung der Entgleisungssicherheit möglich. Vorzugsweise ist die mindestens eine zweite Messgröße eine Kraft und/oder eine Länge. Die mindestens eine zweite Messgröße wird, falls die Oberbaumaschine mehr als zwei Achsen hat, vorzugsweise an mindestens einer äußeren Achse gemessen. Die äußeren Achsen werden auch als führende Achse und nachlaufende Achse bezeichnet. Vorzugsweise wird die mindestens eine zweite Messgröße an beiden Rädern der jeweiligen Achse gemessen, wobei für die Ermittlung der mindestens einen Zustandsgröße insbesondere die zweite Messgröße des entlasteten Rades, also des Rades an der entlasteten Seite, verwendet wird. Die mindestens eine zweite Messgröße wird vorzugsweise wiederholt, insbesondere in gleichen Zeitabständen, gemessen. Mittels der Messwerte wird die mindestens eine Zustandsgröße online und/oder in Echtzeit ermittelt. Hierdurch wird die Entgleisungssicherheit ständig und zuverlässig gewährleistet.

Ein Verfahren nach Anspruch 12 gewährleistet einen erweiterten Einsatzbereich und eine erhöhte Leistungsfähigkeit. Die mindestens eine zweite Messgröße ist vorzugsweise eine Kraft und/oder eine Länge, insbesondere der Federweg eines Rads der Oberbaumaschine. Der Federweg wird beispielsweise mittels eines kontinuierlichen Linearaufnehmers gemessen. Vorzugsweise wird aus der mindestens einen zweiten Messgröße mindestens eine Radaufstandskraft berechnet. Die mindestens eine Zustandsgröße wird in Abhängigkeit der mindestens einen Radaufstandskraft ermittelt. Die mindestens eine Zustandsgröße ist beispielsweise ein Verhältnis einer Radführungskraft zu der zugehörigen Radaufstandskraft. Weiterhin wird die mindestens eine Zustandsgröße beispielsweise derart ermittelt, dass eine zeitliche Änderung der zweiten Messgröße ermittelt und die zeitliche Änderung mit dem mindestens einen Grenzwert verglichen wird. Hierdurch wird die Entgleisungssicherheit genau und zuverlässig überwacht.

Ein Verfahren nach Anspruch 13 gewährleistet einen erweiterten Einsatzbereich und eine erhöhte Leistungsfähigkeit. Die Gefahr einer Entgleisung ist am schnellsten an einer äußeren Achse, also an der führenden Achse und der nachlaufenden Achse, und an der entlasteten Seite der Oberbaumaschine zu erkennen. Vorzugsweise wird die mindestens eine zweite Messgröße somit an mindestens einer äußeren Achse und an der entlasteten Seite der Oberbaumaschine bestimmt. Hierzu sind beispielsweise an jeweils beiden Rädern mindestens einer der äußeren Achsen zweite Messsensoren angeordnet, die zugehörige zweite Messgrößen bestimmen. Anhand der Messgrößen wird erkannt, welche Seite der Oberbaumaschine entlastet ist, so dass die zugehörige zweite Messgröße zur Ermittlung der mindestens einen Zustandsgröße verwendet wird.

Der Erfindung liegt ferner die Aufgabe zugrunde, eine schienengeführte Oberbaumaschine zu schaffen, die einen erweiterten Einsatzbereich sowie eine erhöhte Leistungsfähigkeit und Wirtschaftlichkeit hat.

Diese Aufgabe wird durch eine Oberbaumaschine mit den Merkmalen des Anspruches 14 gelöst. Die Vorteile der erfindungsgemäßen Oberbaumaschine entsprechen den Vorteilen des erfindungsgemäßen Verfahrens. Die Oberbaumaschine kann insbesondere mit den Merkmalen mindestens eines der Ansprüche 2 bis 13 weitergebildet werden.

Kurze Beschreibung der Zeichnungen

Weitere Merkmale, Vorteile und Einzelheiten der Erfindung ergeben sich aus der nachfolgenden Beschreibung mehrerer Ausführungsbeispiele. Es zeigen:

Fig. 1      eine schematische Darstellung einer schienengeführten Oberbaumaschine gemäß einem ersten Ausführungsbeispiel,

Fig. 2      eine schematische Draufsicht auf die auf einem Gleis befindliche Oberbaumaschine in Fig. 1,

Fig. 3      eine geometrische Zeichnung zur Berechnung eines Bogenradius des Gleises in Fig. 2 anhand eines Ausschwenkweges eines Drehgestells der Oberbaumaschine,

Fig. 4      eine schematische Darstellung eines Drehgestells der Oberbaumaschine zur Veranschaulichung einer Federwegmessung,

Fig. 5      eine schematische Draufsicht auf eine Oberbaumaschine gemäß einem zweiten Ausführungsbeispiel, und

Fig. 6      eine geometrische Zeichnung zur Ermittlung eines Bogenradius des Gleises anhand eines gemessenen Abstands zwischen der Oberbaumaschine und dem Gleis.

Beschreibung der Ausführungsformen

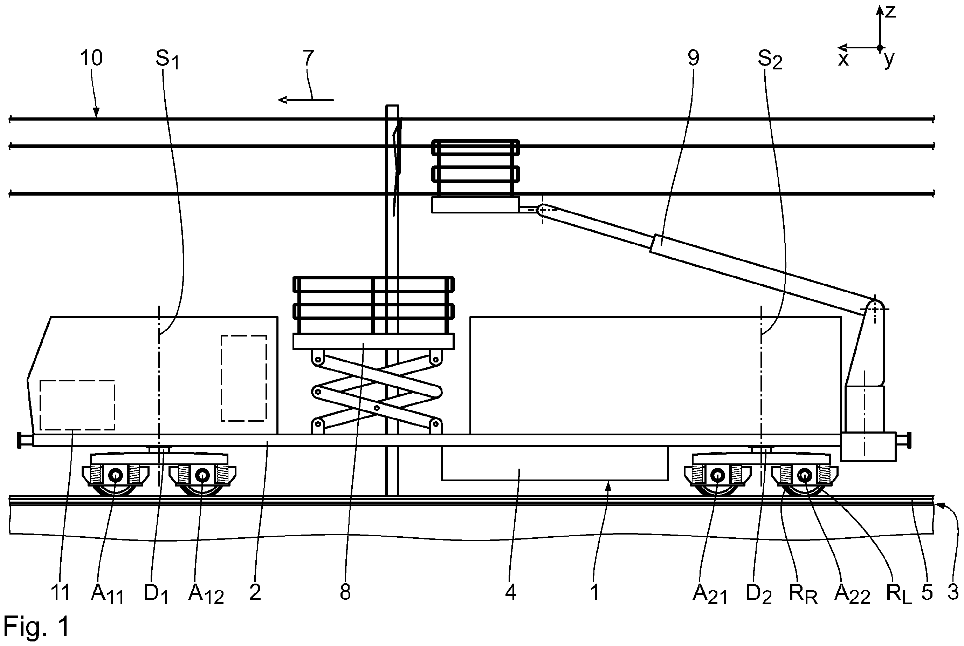

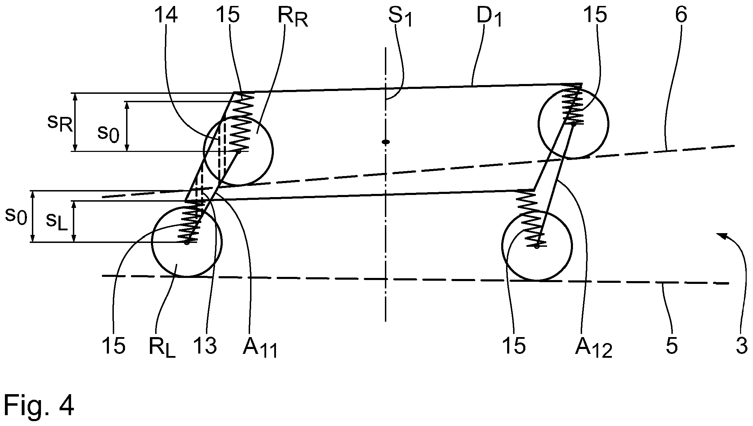

Nachfolgend ist anhand der Fig. 1 bis 4 ein erstes Ausführungsbeispiel der Erfindung beschrieben. Eine Oberbaumaschine 1 weist einen Maschinenrahmen 2 auf, an dem zwei Drehgestelle $D_1$ und $D_2$ um zugehörige Schwenkachsen $S_1$ und $S_2$ verschwenkbar gelagert sind. An jedem der Drehgestelle $D_1$, $D_2$ sind zwei Achsen $A_{11}$, $A_{12}$ und $A_{21}$, $A_{22}$ gelagert. Die Achsen $A_{11}$ und $A_{22}$ bilden die äußeren Achsen der Oberbaumaschine 1. An den Achsen $A_{11}$ bis $A_{22}$ sind jeweils zwei schienenführbare Räder $R_L$ und $R_R$ befestigt. Die Drehgestelle $D_1$, $D_2$ und die zugehörigen Achsen $A_{11}$ bis $A_{22}$ sind in einer horizontalen x-Richtung voneinander beabstandet. Die x-Richtung bildet zusammen mit einer horizontalen y-Richtung und einer vertikalen z-Richtung ein maschinenfestes Koordinatensystem. Die Schwenkachsen $S_1$ und $S_2$ verlaufen parallel zu der z-Richtung. Die Räder $R_L$ und $R_R$ der Achsen $A_{11}$ bis $A_{22}$ sind entsprechend einer Spurweite eines Gleises 3 in der y-Richtung zueinander beabstandet. Zum Drehantreiben mindestens einer der Achsen $A_{11}$ bis $A_{22}$ weist die Oberbaumaschine 1 einen Antrieb 4 auf, der an dem Maschinenrahmen 2 befestigt ist.

Im Betrieb ist die Oberbaumaschine 1 auf Schienen 5, 6 des Gleises 3 angeordnet und schienengeführt mittels des Antriebs 4 in einer Arbeitsrichtung 7 verfahrbar. An dem Maschinenrahmen 2 sind Arbeitsgeräte 8, 9 befestigt. Das Arbeitsgerät 8 ist beispielsweise als Hebearbeitsbühne ausgebildet und in der z-Richtung verlagerbar. Das Arbeitsgerät 9 ist beispielsweise als in der x-, der y- und der z-Richtung frei verschwenkbare Arbeitsbühne ausgebildet. Die Arbeitsgeräte 8, 9 dienen beispielsweise zur Herstellung, Erneuerung und Instandhaltung einer Oberleitungsanlage 10, die dem Gleis 3 zugeordnet ist.

Zur Steuerung der Oberbaumaschine 1 und zur Überwachung einer Entgleisungssicherheit weist die Oberbaumaschine 1 eine Steuereinrichtung 11 auf. Die Steuereinrichtung 11 ist in Signalverbindung mit einem ersten Messsensor 12 und zweiten Messsensoren 13, 14. Der erste Messsensor 12 dient zur Messung eines Ausschwenkweges $s_A$ des Drehgestelles $D_1$. Der erste Messsensor 12 ist zur Messung des Ausschwenkweges $s_A$ an dem Drehgestell $D_1$ und dem Maschinenrahmen 2 angeordnet. Der erste Messsensor 12 ist beispielsweise als kontinuierlich messender Linearaufnehmer oder als diskret messende mechanische Schaltkulisse ausgebildet. Durch die Messung des Ausschwenkweges $s_A$ wird der Steuereinrichtung 11 eine erste Messgröße bereitgestellt.

Die Achsen $A_{11}$ bis $A_{22}$ sind im Bereich der jeweiligen Räder $R_L$ und $R_R$ mittels Federn 15 an dem jeweiligen Drehgestell $D_1$, $D_2$ gelagert. Der Messsensor 13 ist im Bereich des Rades $R_L$ der Achse $A_{11}$ angeordnet, wohingegen der Messsensor 14 im Bereich des Rades $R_R$ der Achse $A_{11}$ angeordnet ist. Der Messsensor 13 dient zur Messung eines Federweges $s_L$ zwischen dem Rad $R_L$ und dem Drehgestell $D_1$, wohingegen der Messsensor 14 zur Messung eines Federweges $s_R$ zwischen dem Rad $R_R$ und dem Drehgestell $D_1$ dient. Die Messsensoren 13, 14 sind beispielsweise als kontinuierlich messende Linearaufnehmer ausgebildet, die im Bereich des jeweiligen Rades $R_L$ und $R_R$ zwischen der Achse $A_{11}$ und dem Drehgestell $D_1$ angeordnet sind. Die äußere Achse $A_{11}$ ist die in der Arbeitsrichtung 7 führende Achse. Alternativ oder zusätzlich können zweite Messsensoren an der äußeren Achse $A_{22}$, die die in der Arbeitsrichtung 7 nachlaufende Achse ist, angeordnet sein.

Nachfolgend ist der Betrieb der schienengeführten Oberbaumaschine 1 und das Überwachen der Entgleisungssicherheit beschrieben:

Zur Herstellung, Erneuerung und/oder Instandhaltung der Oberleitungsanlage 10 wird die Obermaschine 1 von einem Operator mittels des Antriebs 4 in der Arbeitsrichtung 7 auf dem Gleis 3 verfahren. Die Arbeitsgeräte 8, 9 werden zur Durchführung erforderlicher Arbeiten an der Oberleitungsanlage 10 nach Bedarf positioniert. Dieser Betriebszustand wird als Arbeitsfahrt bezeichnet.

Während der Arbeitsfahrt bestimmt die Oberbaumaschine 1 mittels des ersten Messsensors 12 wiederholt, vorzugsweise in konstanten Zeitabständen, den Ausschwenkweg $s_A$ des Drehgestells $D_1$ und stellt die ermittelten Messwerte der Steuereinrichtung 11 bereit. Zusätzlich bestimmt die Oberbaumaschine 1 wiederholt, vorzugsweise in konstanten Zeitabständen, die Federwege $s_L$ und $s_R$ im Bereich der Räder $R_L$ und $R_R$ der führenden Achse $A_{11}$ und stellt die ermittelten Messwerte der Steuereinrichtung 11 bereit. Vorzugsweise werden der Ausschwenkweg $s_A$ und die Federwege $s_L$ und $s_R$ zu übereinstimmenden Zeitpunkten gemessen.

Die Arbeitsgeräte 8, 9 erzeugen je nach Last und Stellung ein Kippmoment auf die Oberbaumaschine 1, das die Entgleisungssicherheit der Oberbaumaschine 1 gefährden kann. Zur Überwachung der Entgleisungssicherheit wird eine Zustandsgröße Z der Oberbaumaschine 1 in Abhängigkeit des aktuellen Betriebszustands ermittelt und die ermittelte Zustandsgröße Z zur Überwachung der Entgleisungssicherheit mit vordefinierten Grenzwerten Gw und $G_S$ verglichen. Die Zustandsgröße Z ist ein Quotient aus einer Radführungskraft $Y_a$ und einer Radaufstandskraft Q. Für die Zustandsgröße Z gilt somit:

$$Z = Y_a/Q \tag{1}.$$

Die Radführungskraft $Y_a$ wird in Abhängigkeit des gemessenen Ausschwenkweges $s_A$ ermittelt. Hierzu wird mittels der Steuereinrichtung 11 zunächst aus dem gemessenen Ausschwenkweg $s_A$ ein Krümmungsparameter des Abschnitts des Gleises 3 ermittelt, auf dem sich die Oberbaumaschine 1 aktuell bzw. momentan befindet. Der Krümmungsparameter ist ein Bogenradius R des Abschnitts des Gleises 3, auf dem sich die Oberbaumaschine 1 aktuell befindet. Aus dem Ausschwenkweg $s_A$ wird zunächst ein Ausschwenkwinkel $\varphi$ berechnet. Der Ausschwenkwinkel $\varphi$ ergibt sich wie folgt:

$$\varphi \approx s_A/r \qquad (2),$$

wobei $s_A$ der gemessene Ausschwenkweg und r ein Abstand des Messsensors 12 von der Schwenkachse $S_1$ auf der Verbindungsgeraden zwischen den Schwenkachsen $S_1$ und $S_2$ ist. Üblicherweise ist der Ausschwenkweg $s_A$ wesentlich kleiner als der Abstand r. Der Abstand r ist bekannt und konstant.

Anhand des Ausschwenkwinkels $\varphi$ nach Gleichung (2) wird der Bogenradius R wie folgt berechnet:

$$R = \frac{D}{2 \cdot \sin(\varphi)} \qquad (3),$$

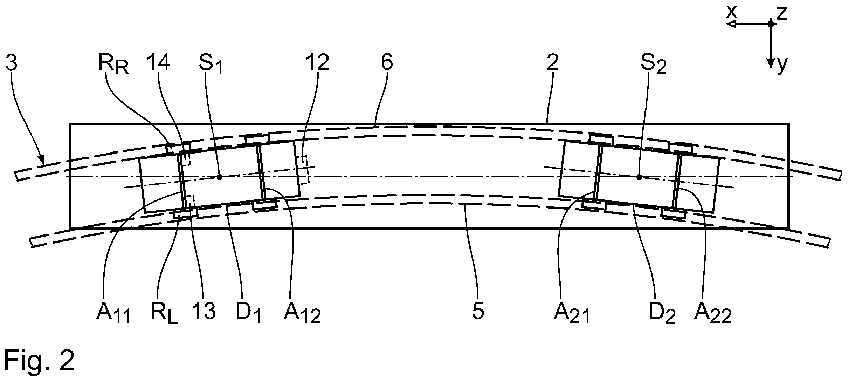

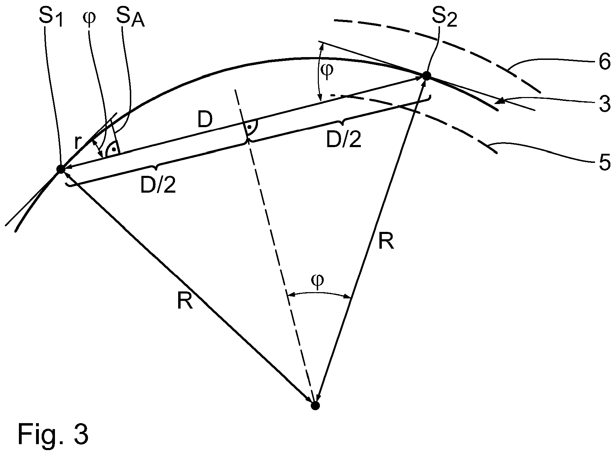

wobei D der Abstand der Schwenkachsen $S_1$ und $S_2$ ist. Der Abstand D ist bekannt und konstant. Die Berechnung des Bogenradius R ist in Fig. 3 veranschaulicht. Aus dem Ausschwenkweg $s_A$ ergibt sich zudem die Krümmungsrichtung des Gleises 3, so dass - im Beispiel von Fig. 2 - das bogeninnere Rad $R_L$ und das bogenäußere Rad $R_R$ eindeutig bestimmt werden kann.

Der Bogenradius R ist ein mittlerer Bogenradius, der zwischen einem Bogenradius der kurvenäußeren Schiene 6 und der kurveninneren Schiene 5 liegt. Der Bogenradius R kann näherungsweise als Bogenradius der bogenäußeren Schiene 6 angenommen werden oder zur exakten Berechnung des Bogenradius der kurvenäußeren Schiene 6 um eine halbe Spurweite des Gleises 3 erhöht werden.

Gemäß der Norm bzw. Vorschrift ORE B55/RP8 (siehe Tab. I. 2, Lfd. Nr. 20) wird die Radführungskraft $Y_a$ des bogenäußeren Rades $R_R$ nach folgender Gleichung (4) in kN ermittelt:

$$Y_a = \{\overline{Q}\left[x\left(m_1 \cdot a_q + m_2\right) + m_3 \cdot a_q + m_4\right] + x\left(c_1 \cdot a_q + c_2\right) + c_3 \cdot a_q + c_4\} \, 10^{-3},$$

wobei

$\overline{Q}$ eine mittlere Radaufstandskraft in kN,
$a_q$ eine Seitenbeschleunigung in m/s$^2$,
$m_1$ bis $m_4$ und $c_1$ bis $c_4$ Regressionsfaktoren und
x eine Hilfsgröße bezeichnet.

Für Gleichung (4) und die Berechnung der Radführungskraft $Y_a$ in kN gilt:

| Regressionsfaktoren | | | | | | | |
|---|---|---|---|---|---|---|---|
| $m_1$ | $m_2$ | $m_3$ | $m_4$ | $c_1$ | $c_2$ | $c_3$ | $c_4$ |
| 5,716 | -25,700 | -89,623 | 846,625 | -170,593 | 7,837 | 3609,753 | 1810,277 |

und

$$a_q = 0 \text{ m/s}^2.$$

Die mittlere Radaufstandskraft $\overline{Q}$ von der Oberbaumaschine 1 ist bekannt und wurde beispielsweise durch eine Messung ermittelt. Für die mittlere Radaufstandskraft $\overline{Q}$ gilt beispielsweise: $\overline{Q}$ = 65,12 kN.

Für die variable Hilfsgröße x wird der berechnete Bogenradius R in Gleichung (4) eingesetzt.

Die Radaufstandskraft Q ist abhängig von einem auf die Oberbaumaschine 1 wirkenden Kippmoment, einer momentanen Verwindung im Gleis 3 und einer Überhöhung des Gleises 3. Die aktuelle Radaufstandskraft Q ergibt sich wie folgt:

$$Q = Q_0 - \Delta s \cdot k \hspace{4cm} (5),$$

wobei

$Q_0$ eine Radaufstandskraft in einer Ruhelage der Oberbaumaschine 1,
k eine Federkonstante der Federn 15 und
$\Delta s$ einen Einfeder- bzw. Ausfederweg bezeichnet.

Der Einfeder- bzw. Ausfederweg $\Delta s$ ergibt sich zu

$$\Delta s = s_L - s_0 \hspace{2cm} \text{für das Rad } R_L \hspace{2cm} (6),$$

$$\Delta s = s_R - s_0 \hspace{2cm} \text{für das Rad } R_R \hspace{2cm} (7),$$

wobei $s_L$, $s_R$ die gemessenen Federwege sind und $s_0$ ein Federweg in der Ruhelage ist.

Aus den berechneten Radaufstandskräften Q für die Räder $R_L$ und $R_R$ wird die kleinere Radaufstandskraft Q des bogenäußeren Rades $R_R$ ausgewählt, da das bogenäußere Rad $R_R$ eine entlastete Seite der Oberbaumaschine 1 charakterisiert. Aus der ermittelten Radführungskraft $Y_a$ und der ermittelten Radaufstandskraft Q des Rades $R_R$ wird anschließend nach Gleichung (1) die Zustandsgröße Z berechnet.

Die Zustandsgröße Z charakterisiert die Entgleisungssicherheit der Oberbaumaschine 1. Zur Überprüfung, ob die Entgleisungssicherheit zuverlässig gewährleistet oder gefährdet ist, wird die Zustandsgröße Z mit dem ersten Grenzwert Gw und dem zweiten Grenzwert Gs verglichen. Für die Grenzwerte gilt: Gw < Gs. Die Grenzwerte werden beispielsweise wie folgt gewählt: Gw = 0,98 und Gs = 1,08.

Die Steuereinrichtung 11 vergleicht während der Arbeitsfahrt wiederholt und online bzw. in Echtzeit die ermittelte Zustandsgröße Z mit dem ersten Grenzwert $G_W$. Wird der Grenzwert $G_W$ überschritten, so ist die Entgleisungssicherheit gefährdet und die Oberbaumaschine 1 erzeugt ein akustisches und/oder optisches Warnsignal. Aufgrund des Warnsignals hat der Operator die Möglichkeit, die Oberbaumaschine 1 wieder in einen sicheren Betriebszustand zu überführen, beispielsweise ein aufgrund der Stellung der Arbeitsgeräte 8, 9 erzeugtes, zu hohes Kippmoment zu reduzieren. Weiterhin vergleicht die Steuereinrichtung 11 die ermittelte Zustandsgröße Z wiederholt mit dem zweiten Grenzwert Gs, beispielsweise dann, wenn der Grenzwert Gw überschritten wurde. Wird auch der Grenzwert $G_S$ überschritten, ist die Entgleisungssicherheit der Oberbaumaschine 1 akut gefährdet, so dass die Steuereinrichtung 11 den Betriebszustand der Oberbaumaschine 1 unmittelbar und automatisch verändert. Die Steuereinrichtung 11 reduziert beispielsweise das Kippmoment durch automatisches Verändern der Stellung der Arbeitsgeräte 8, 9 und/oder stoppt die Arbeitsfahrt der Oberbaumaschine 1 automatisch. Hierdurch ist zu jedem Zeitpunkt die Entgleisungssicherheit der Oberbaumaschine 1 sicher und zuverlässig gewährleistet. Gleichzeitig werden der mögliche Einsatzbereich und die Leistungsfähigkeit der Oberbaumaschine 1 weitest möglich im Rahmen der Entgleisungssicherheit ausgeschöpft.

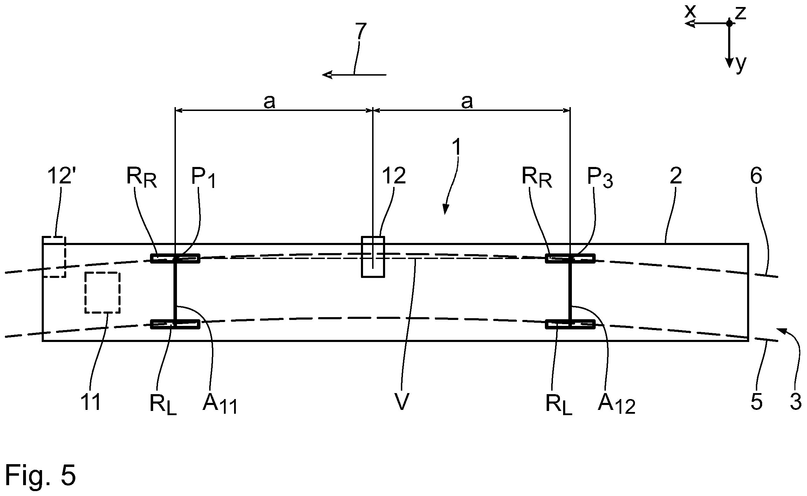

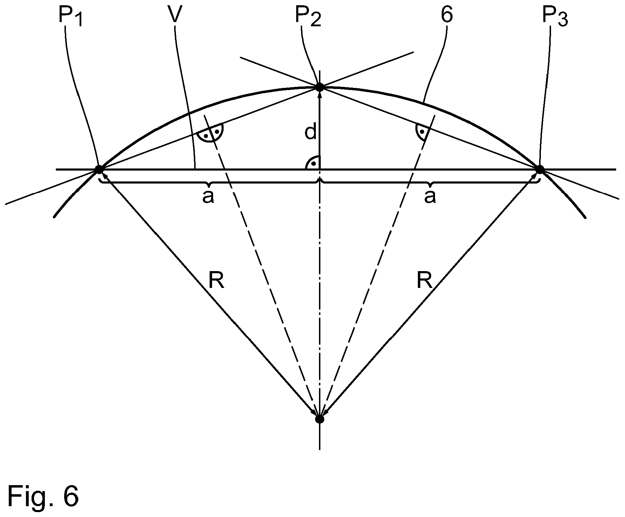

Nachfolgend ist anhand der Fig. 5 und 6 ein zweites Ausführungsbeispiel der Erfindung beschrieben. Im Unterschied zu dem ersten Ausführungsbeispiel weist die Oberbaumaschine 1 zwei Achsen $A_{11}$ und $A_{22}$ auf, die nicht verschwenkbar, also nicht mittels Drehgestellen an dem Maschinenrahmen 2 gelagert sind. Der erste Messsensor 12 ist mittig zwischen den Achsen $A_{11}$ und $A_{22}$ an dem Maschinenrahmen 2 befestigt und dient zur Messung eines horizontalen Abstandes d zwischen der Oberbaumaschine 1 und einer der Schienen 5, 6 des Gleises 3. In Fig. 5 ist der Messsensor 12 im Bereich der bogenäußeren Schiene 6 angeordnet, so dass dieser den horizontalen Abstand d zwischen der bogenäußeren Schiene 6 und der Oberbaumaschine 1 misst. Der Messsensor 12 ist beispielsweise optisch ausgebildet. Der horizontale Abstand d wird auch als Pfeilhöhe bezeichnet.

Der Messsensor 12 misst - geometrisch betrachtet - den Abstand d zwischen der bogenäußeren Schiene 6 und einer Verbindungsgeraden V, die durch die Kontaktpunkte $P_1$ und $P_3$ der Räder $R_R$ der Achsen $A_{11}$ und $A_{22}$ definiert ist. In Fig. 6 ist die Messung des Abstandes d und die Berechnung des Bogenradius R der bogenäußeren Schiene 6 veranschaulicht. Durch die Messung des Abstandes d wird ein weiterer zwischen den Kontaktpunkten $P_1$ und $P_3$ liegender Punkt $P_2$ bestimmt. Durch die Punkte $P_1$ bis $P_3$ ist der Bogenradius R eindeutig festgelegt, so dass der Bogenradius R wie folgt berechenbar ist:

$$R = \frac{a^2}{2 \cdot d} + \frac{d}{2} \approx \frac{a^2}{2 \cdot d} \qquad (8),$$

wobei a der Abstand der Kontaktpunkte $P_1$ und $P_3$ zu dem Messsensor 12 ist. Da der Abstand d wesentlich kleiner als der Abstand a ist, ist der Summand d/2 vernachlässigbar.

Alternativ zu der beschriebenen Anordnung des Messsensors 12 mittig zwischen den Achsen $A_{11}$ und $A_{22}$ kann die Anordnung auch in einem Überhang der Oberbaumaschine 1 erfolgen. Ein entsprechender erster Messsensor 12' ist in Fig. 5 veranschaulicht. Hierdurch werden in entsprechender Weise Punkte $P_1$ bis $P_3$ definiert, aus denen der Bogenradius R berechenbar ist.

Aus dem ermittelten Bogenradius R kann mit Gleichung (1) die Radführungskraft $Y_a$ am bogenäußeren Rad $R_R$ entsprechend dem ersten Ausführungsbeispiel berechnet werden. Die Berechnung der Radaufstandskraft Q und der Zustandsgröße Z sowie die Überwachung der Entgleisungssicherheit durch Vergleich mit den Grenzwerten $G_W$ und $G_S$ erfolgt entsprechend zu dem ersten Ausführungsbeispiel. Hinsichtlich des weiteren Aufbaus und der weiteren Funktion der Oberbaumaschine 1 wird dementsprechend auf das erste Ausführungsbeispiel verwiesen.

Alternativ oder zusätzlich kann in der Steuereinrichtung 11 ein minimaler Wert $Q_{min}$ für die Radaufstandskraft Q gespeichert sein, mit dem die Berechnung der Zustandsgröße Z und die Überwachung der Entgleisungssicherheit erfolgt. In diesem Fall kann auf die Messung der Federwege $s_L$ und $s_R$ sowie die zugehörigen zweiten Messsensoren 13, 14 verzichtet werden. Hierdurch wird der Aufbau der Oberbaumaschine 1 vereinfacht. Weiterhin kann der Wert $Q_{min}$ für den Fall verwendet werden, dass die Messung des Federweges $s_L$ und/oder des Federweges $s_R$ ausfällt. Der minimal im Betrieb vorkommende Wert $Q_{min}$ wird beispielsweise vor Inbetriebnahme der Oberbaumaschine 1 berechnet und als fester Wert in der Steuereinrichtung 11 gespeichert.

Dadurch, dass die Entgleisungssicherheit in Abhängigkeit des momentanen Betriebszustands der Oberbaumaschine 1 ständig überwacht wird, kann die Leistungsfähigkeit der Oberbaumaschine 1 in jedem momentanen Betriebszustand bis zu der physikalischen Grenze ausgeschöpft werden, so dass sich der Einsatzbereich der Oberbaumaschine 1 erweitert und sich die Wirtschaftlichkeit erhöht.

**Patentansprüche**

1. Verfahren zum Betreiben einer schienengeführten Oberbaumaschine, umfassend die Schritte:

   - Bereitstellen einer schienengeführten Oberbaumaschine (1) auf einem Gleis (3),
   - Ermitteln mindestens einer Zustandsgröße (Z) der Oberbaumaschine (1) in Abhängigkeit eines Betriebszustands, wobei die mindestens eine Zustandsgröße (Z) in Abhängigkeit einer Radführungskraft ($Y_a$) und mindestens einer Radaufstandskraft (Q) der Oberbaumaschine (1) ermittelt wird, und
   - Vergleichen der mindestens einen Zustandsgröße (Z) mit mindestens einem vordefinierten Grenzwert (Gw, Gs) zur Überwachung der Entgleisungssicherheit der Oberbaumaschine (1).

2. Verfahren nach Anspruch 1, wobei während einer Arbeitsfahrt ein Arbeitsgerät (8, 9) der Oberbaumaschine (1) betätigt wird und die mindestens eine Zustandsgröße (Z) wiederholt während der Arbeitsfahrt ermittelt und mit dem mindestens einen Grenzwert (Gw, Gs) verglichen wird.

3. Verfahren nach Anspruch 1 oder 2, wobei die mindestens eine Zustandsgröße (Z) mit einem Grenzwert Gw verglichen wird und die Oberbaumaschine (1) ein Warnsignal erzeugt, wenn die mindestens eine Zustandsgröße (Z) außerhalb eines durch den Grenzwert Gw definierten Toleranzbereichs liegt.

4. Verfahren nach einem der Ansprüche 1 bis 3, wobei dass die mindestens eine Zustandsgröße (Z) mit einem Grenzwert Gs verglichen wird und der Betriebszustand der Oberbaumaschine (1) automatisch verändert wird, wenn die mindestens eine Zustandsgröße (Z) außerhalb eines durch den Grenzwert Gs definierten Toleranzbereichs liegt.

5. Verfahren nach einem der Ansprüche 1 bis 4, wobei die mindestens eine Zustandsgröße (Z) in Abhängigkeit eines Krümmungsparameters, insbesondere eines Bogenradius (R), des Gleises (3) ermittelt wird.

6. Verfahren nach Anspruch 5, wobei zur Ermittlung der mindestens einen Zustandsgröße (Z) die zu der Entgleisungssicherheit erforderliche Radführungskraft ($Y_a$) der Oberbaumaschine (1) in Abhängigkeit des Krümmungsparameters ermittelt wird.

7. Verfahren nach einem der Ansprüche 1 bis 6, wobei die Oberbaumaschine (1) mittels mindestens eines ersten Messsensors (12) mindestens eine erste Messgröße bestimmt, aus der ein Krümmungsparameter des Gleises (3) ermittelt wird.

8. Verfahren nach Anspruch 7, wobei die mindestens eine erste Messgröße ein Ausschwenkweg ($s_A$) eines Drehgestells ($D_1$) der Oberbaumaschine (1) ist.

9. Verfahren nach Anspruch 7 oder 8, wobei die mindestens eine erste Messgröße ein horizontaler Abstand (d) zwischen der Oberbaumaschine (1) und dem Gleis (3) ist.

10. Verfahren nach einem der Ansprüche 1 bis 9, wobei dass für die mindestens eine Radaufstandskraft (Q) ein vordefinierter Wert ($Q_{min}$) in einer Steuereinrichtung (11) der Oberbaumaschine (1) gespeichert ist.

11. Verfahren nach einem der Ansprüche 1 bis 10, wobei die Oberbaumaschine (1) mittels mindestens eines zweiten Messsensors (13, 14) mindestens eine zweite Messgröße bestimmt, aus der die mindestens eine Radaufstandskraft (Q) ermittelt wird.

12. Verfahren nach einem der Ansprüche 1 bis 11, wobei die mindestens eine Zustandsgröße (Z) in Abhängigkeit mindestens einer zweiten Messgröße ermittelt wird, die insbesondere ein Federweg ($s_L$, $s_R$) eines Rads ($R_L$, $R_R$) der Oberbaumaschine (1) ist.

13. Verfahren nach Anspruch 11 oder 12, wobei mindestens eine zweite Messgröße an mindestens einer äußeren Achse ($A_{11}$) der Oberbaumaschine (1) und/oder an einer entlasteten Seite der Oberbaumaschine (1) bestimmt wird.

14. Schienengeführte Oberbaumaschine mit

- einem Maschinenrahmen (2),
- mindestens zwei an dem Maschinenrahmen (2) gelagerten Achsen ($A_{11}$, $A_{12}$, $A_{21}$, $A_{22}$; $A_{11}$, $A_{22}$) und daran angeordneten schienenführbaren Rädern ($R_L$, $R_R$),
- einem Antrieb (4) zum Drehantreiben mindestens einer der Achsen ($A_{11}$, $A_{12}$, $A_{21}$, $A_{22}$; $A_{11}$, $A_{22}$), und
- einem an dem Maschinenrahmen (2) befestigten Arbeitsgerät (8, 9), und einer Steuereinrichtung (11), die derart ausgebildet ist, dass
- mindestens eine Zustandsgröße (Z) der Oberbaumaschine (1) in Abhängigkeit eines Betriebszustands derart ermittelt wird, dass die mindestens eine Zustandsgröße (Z) in Abhängigkeit einer Radführungskraft ($Y_a$) und mindestens einer Radaufstandskraft (Q) der Oberbaumaschine (1) ermittelt wird, und
- die mindestens eine Zustandsgröße (Z) mit mindestens einem vordefinierten Grenzwert (Gw, Gs) zur Überwachung einer Entgleisungssicherheit der Oberbaumaschine (1) verglichen wird.

**Claims**

1. A method of operating a rail-guided permanent way machine, comprising the steps of:

- providing a rail-guided permanent way machine (1) on a track (3),
- determining at least one state variable (Z) of the permanent way machine (1) in dependence on an operating state, wherein
- the at least one state variable (Z) is determined in dependence on a wheel guiding force $Y_a$ and on at least one vertical wheel force (Q) of the permanent way machine (1)
- comparing the at least one state variable (Z) to at least one pre-defined limit value (Gw, Gs) for monitoring the derailment safety of the permanent way machine (1).

2. A method according to claim 1, wherein a working device (8, 9) of the permanent way machine (1) is operated during a working run, and the at least one state variable (Z) is repeatedly determined during the working run and compared to the at least one limit value (Gw, Gs).

3. A method according to claim 1 or 2, wherein the at least one state variable (Z) is compared to at least one limit value Gw, and the permanent way machine (1) generates a warning signal if the at least one state variable (Z) lies beyond a tolerance range defined by the limit value Gw.

4. A method according to one of claims 1 to 3, wherein the at least one state variable (Z) is compared to a limit value Gs, and the operating state of the permanent way machine (1) is changed automatically if the at least one state variable (Z) lies beyond a tolerance range defined by the limit value Gs.

5. A method according to one of claims 1 to 4, wherein the at least one state variable (Z) is determined in dependence on a curvature parameter, in particular a curve radius (R) of the track (3).

6. A method according to claim 5, wherein for determining the at least one state variable (Z), the wheel guiding force ($Y_a$) of the permanent way machine (1) necessary for the derailment safety is determined in dependence on the curvature parameter.

7. A method according to one of claims 1 to 6, wherein the permanent way machine (1) defines by means of at least one first measuring sensor (12) at least one first measuring value from which a curvature parameter of the track (3) is determined.

8. A method according to claim 7, wherein the at least one first measuring value is a swing-out path ($s_A$) of a bogie ($D_1$) of the permanent way machine (1).

9. A method according to claim 7 or 8, wherein the at least one first measuring value is a horizontal distance (d) between the permanent way machine (1) and the track (3).

10. A method according to one of the claims 1 to 9, wherein for the at least one vertical wheel force (Q), a pre-defined value ($Q_{min}$) is stored in a control device (11) of the permanent way machine (1).

11. A method according to one of the claims 1 to 10, wherein the permanent way machine (1) determines by means of at least one second measuring sensor (13, 14) at least one second measuring value from which the at least one vertical wheel force (Q) is determined.

12. A method according to one of claims 1 to 11, wherein the at least one state variable (Z) is determined in dependence on at least one second measuring value which is, in particular, a spring deflection ($s_L$, $s_R$) of a wheel ($R_L$, $R_R$) of the permanent way machine (1).

13. A method according to claim 11 or 12, wherein the at least one second measuring value is determined at at least one outer axle ($A_{11}$) of the permanent way machine (1) and/or at a load-relieved side of the permanent way machine (1).

14. A rail-guided permanent way machine having

   - a machine frame (2),
   - at least two axles ($A_{11}$, $A_{12}$, $A_{21}$, $A_{22}$; $A_{11}$, $A_{22}$) mounted on the machine frame (2) and rail-guidable wheels ($R_L$, $R_R$) arranged thereon,
   - a drive (4) for rotary actuation of at least one of the axles ($A_{11}$, $A_{12}$, $A_{21}$, $A_{22}$; $A_{11}$, $A_{22}$), and
   - a working device (8, 9) fastened to the machine frame (2) and
   - a control device (11) which is designed in such a way that
   - at least one state variable (Z) of the permanent way machine (1) is determined in dependence on an operating state, in such a way that the at least one state variable (Z) is determined in dependence on a wheel guiding force $Y_a$ and on at least one vertical wheel force (Q) of the permanent way machine (1) and
   - the at least one state variable (Z) is compared to at least one pre-defined limit value (Gw, Gs) for monitoring a derailment safety of the permanent way machine (1).

**Revendications**

1. Procédé d'exploitation d'une machine de voie guidée sur rails, comprenant les étapes de :

   - mise à disposition d'une machine de voie guidée sur rails (1) sur une voie ferrée (3),
   - détermination d'au moins un paramètre d'état (Z) de la machine de voie (1) en fonction d'un état de fonctionnement, dans lequel

l'au moins un paramètre d'état (Z) est déterminé en fonction d'une force de guidage de roue ($Y_a$) et d'au moins une force de contact de roue (Q) de la machine de voie (1), et

- comparaison de l'au moins un paramètre d'état (Z) à au moins une valeur limite prédéfinie (Gw, Gs) pour la surveillance de la sécurité contre le déraillement de la machine de voie (1).

2. Procédé selon la revendication 1, dans lequel un appareil de travail (8, 9) de la machine de voie (1) est actionné pendant un trajet de travail, et l'au moins un paramètre d'état (Z) est déterminé de manière répétée pendant le trajet de travail et comparé à l'au moins une valeur limite (Gw, Gs).

3. Procédé selon la revendication 1 ou 2, dans lequel l'au moins un paramètre d'état (Z) est comparé à une valeur limite Gw et la machine de voie (1) génère un signal d'avertissement lorsque l'au moins un paramètre d'état (Z) se situe en dehors d'une région de tolérance définie par la valeur limite Gw.

4. Procédé selon une des revendications 1 à 3, dans lequel l'au moins un paramètre d'état (Z) est comparé à une valeur limite Gs et l'état de fonctionnement de la machine de voie (1) est automatiquement modifié lorsque l'au moins un paramètre d'état (Z) se situe en dehors d'une région de tolérance définie par la valeur limite Gs.

5. Procédé selon une des revendications 1 à 4, dans lequel l'au moins un paramètre d'état (Z) est déterminé en fonction d'un paramètre de courbure, notamment d'un rayon de courbure (R), de la voie ferrée (3).

6. Procédé selon la revendication 5, dans lequel la force de guidage de roue ($Y_a$) nécessaire à la sécurité contre le déraillement de la machine de voie (1) est déterminée en fonction du paramètre de courbure pour la détermination de l'au moins un paramètre d'état (Z).

7. Procédé selon une des revendications 1 à 6, dans lequel la machine de voie (1) détermine au moyen d'au moins un premier capteur de mesure (12) au moins une première grandeur de mesure à partir de laquelle un paramètre de courbure de la voie ferrée (3) est déterminé.

8. Procédé selon la revendication 7, dans lequel l'au moins une première grandeur de mesure est un trajet d'oscillation ($s_A$) d'un bogie ($D_1$) de la machine de voie (1).

9. Procédé selon la revendication 7 ou 8, dans lequel l'au moins une première grandeur de mesure est un écart horizontal (d) entre la machine de voie (1) et la voie ferrée (3).

10. Procédé selon une des revendications 1 à 9, dans lequel une valeur prédéfinie ($Q_{min}$) est mémorisée dans un dispositif de commande (11) de la machine de voie (1) pour l'au moins une force de contact de roue (Q).

11. Procédé selon une des revendications 1 à 10, dans lequel la machine de voie (1) détermine au moyen d'au moins un second capteur de mesure (13, 14) au moins une seconde grandeur de mesure à partir de laquelle l'au moins une force de contact de roue (Q) est déterminée.

12. Procédé selon une des revendications 1 à 11, dans lequel l'au moins un paramètre d'état (Z) est déterminé en fonction d'au moins une seconde grandeur de mesure qui est notamment un trajet d'amortissement ($s_L$, $s_R$) d'une roue ($R_L$, $R_R$) de la machine de voie (1).

13. Procédé selon la revendication 11 ou 12, dans lequel l'au moins une seconde grandeur de mesure est déterminée sur au moins un essieu extérieur (Au) de la machine de voie (1) et/ou sur un côté déchargé de la machine de voie (1).

14. Machine de voie guidée sur rails avec

- un châssis de machine (2),
- au moins deux essieux ($A_{11}$, $A_{12}$, $A_{21}$, $A_{22}$, $A_{11}$, $A_{22}$) logés sur le châssis de machine (2) et des roues ($R_L$, $R_R$) pouvant être guidées sur rails, disposées sur eux,
- un entraînement (4) pour l'entraînement rotatif d'au moins un des essieux ($A_{11}$, $A_{12}$, $A_{21}$, $A_{22}$ ; $A_{11}$, $A_{22}$), et
- un appareil de travail (8, 9) fixé au châssis de machine (2), et un dispositif de commande (11) qui est réalisé de telle sorte que
- au moins un paramètre d'état (Z) de la machine de voie (1) est déterminé en fonction d'un état de fonctionnement de telle sorte que l'au moins un paramètre d'état (Z) est déterminé en fonction d'une force de guidage de roue

($Y_a$) et d'au moins une force de contact de roue (Q) de la machine de voie (1), et
- l'au moins un paramètre d'état (Z) est comparé à au moins une valeur limite prédéfinie (Gw, Gs) pour la surveillance d'une sécurité contre le déraillement de la machine de voie (1).

Fig. 1

Fig. 2

Fig. 3

Fig. 4

Fig. 5

Fig. 6

**IN DER BESCHREIBUNG AUFGEFÜHRTE DOKUMENTE**

**In der Beschreibung aufgeführte Patentdokumente**

- DE 3015227 A1
- WO 2017144153 A2
- DE 202006019036 U1